# EUROPEAN PATENT SPECIFICATION

(11) **EP 0 612 478 B1**
(45) Date of publication and mention of the grant of the patent: **11.12.1996**
(21) Application number: 93200837.8
(22) Date of filing: 23.03.1993
(51) Int. Cl.: A23G 1/00

(54) **Confectionery fat compositions**
Fettzusammensetzungen für Konfekt
Compositions grasses de confiserie

(30) Priority: 26.02.1993 EP 93301496
(43) Date of publication of application: 31.08.1994
(73) Proprietor: UNILEVER N.V., NL-3000 DK Rotterdam (NL); UNILEVER PLC, London EC4P 4BQ (GB)
(72) Inventor: Bennett, Jane Caroline, Charlton, London SE7 7JY (GB); Cain, Frederick William, NL-2271 VL Voorburg (NL); Talbot, Geoffrey, Kempston, Beds MK42 7JW (GB)
(74) Representative: Sikken, Antonius H. J. M.

(56) References cited:
- EP-A- 0 276 548
- EP-A- 0 293 194
- EP-A- 0 321 227
- EP-A- 0 451 781
- EP-A- 0 502 697
- DATABASE WPI Week 8651, Derwent Publications Ltd., London, GB; AN 86-337017 & JP-A-61 254 143 (FUJI OIL KK ET AL.) 11 November 1986

## Description

In the preparation of confectionery products based on chocolate or chocolate-like materials, fats are applied that need tempering. Tempering is a time-consuming process wherein the temperature of the product is increased and decreased during time intervals to bring the cocoa butter and/or cocoa butter equivalent present in the confectionery fat into the desired stable crystal form in order to avoid, or at least inhibit, bloom formation of the fat in the confectionery product upon storage.

EP 293,194 discloses the problem, related to the use of PUFA-rich fats in chocolate-fats or in confectionery filling fats. It is said, that it is difficult to combine increased PUFA-levels of the fats with good product-performance, such as meltdown, solid fat content, processing-conditions, crystallisation behaviour etc. According to EP *'*194 a solution was found by combining cocoabutter replacement fats, such as palm oil midfraction (so our component B), with a hard fat, having at least 50 wt% StOSt and/or PoSt and with a softening fat. Softening fats are fats high in PUFA, which also can contain some butterfat. However it is also indicated that softening fats can be butterfat or fractions thereof (so our component C). The weight ration palm mid fraction: hard fat can range from 1:4 to 4:1. The amount of liquid oil can range from 4-50% based on total fat-composition. Above compositions however do not solve the problem of how to combine short temper times with good gloss and bloomperfermance, without the composition becoming too hard.

Although it is known that addition of certain fat components to the cocoa butter or coco butter equivalent can decrease the tempering time, addition of these components so far led to the formation of chocolate(-like) products that were too soft at temperatures between 15 and 25°C and/or that demonstrated bloom formation within 3 months' storage time.

Therefore, we have conducted a study to find out whether it would be possible to produce fat components based on cocoa butter and/or cocoa butter equivalents that could combine shorter tempering times with good product performance (= bloom and hardness).

The above-mentioned study has resulted in our invention. According to our invention fat compositions were found that are suitable for use in chocolate or chocolate-like materials comprising components A, B and C, wherein :
A = vegetable fat having a weight ratio between saturated fatty acid residues (= C_{SAFA}) and unsaturated fatty acid residues (C_{UNSAT}) ranging from 0.5-1.3, preferably from 0.7-1.1,
   C_{SAFA} being the total of saturated fatty acid residues having 16 and 18 C atoms and the trans-mono-unsaturated residues having 18 C atoms,
   C_{UNSAT} being the total of the cis-mono-unsaturated and di-unsaturated fatty acid residues having 18 C atoms,
B = a fat having a SUS content greater than 65 wt.%, preferably greater than 80 wt.%;
   S = saturated fatty acids having 16 or 18 C atoms;
   U = mono-unsaturated fatty acids having 18-22 C atoms;
C = butterfat or a fraction thereof,

A, B and C being present in amounts of 5-30 wt.%, preferably 10-20 wt.% of A, more than 60 wt.%, preferably more than 70 wt.% of B, 5-20 wt.%, preferably 7-12 wt.% of C.

Very good results were obtained with compositions wherein fat A has an N₂₀ (unstab., NMR) of less than 25.

Although fat A can be chosen from a wide variety of vegetable fats or mixtures of vegetable fats, we prefer to apply a fat A that has a SUS content of less than 55 wt.%, preferably less than 50 wt.% (S and U as defined above). Examples of such fats A are palm oil fractions, shea or shea fractions, mixtures of palm oil fractions and shea and/or hardened bean oil. Very suitable fats A can be obtained by blending a liquid oil D (other than fat B) having a (U₂S + U₃) content of more than 35 wt.%, preferably more than 50 wt.%, and a fat E having an N₂₀ (unstab., NMR) of more than 20, preferably more than 40.

Fat D can be a fat selected from the group consisting of palm oil, palm oil fractions, sunflower oil, rapeseed oil, high oleic rapeseed oil, fractions or mixtures thereof.

Fat E is preferably a trans-hardened fat having a melting point between 25 and 55°C.

Fat B is in fact the basic fat in the compositions according to the invention. Suitable fats B are cocoa butter and cocoa butter equivalents, such as palm oil mid-fractions, optionally mixed with shea or shea fractions and/or illipe. Fats based on synthetic, enzymically made cocoa butter equivalents rich in triglycerides of the POP, StOP and/or StOSt-type (P = palmitic, St = stearic, O = oleic) are also very suitable.

Fat C is butterfat or a fraction thereof. Suitable fats C are, e.g., butterfat, butter olein, butter stearin, but full cream milk powder is also an excellent butterfat source.

The tempering time mentioned above is defined as the time required to reach the right degree of temper according to the Greer test.

### EXAMPLES

1. Products were made, using the following recipe :

| | wt.% |
|---|---|
| Cocoa powder | 6.5 |
| Cocoa butter | 24.5 |
| Full milk cream powder* | 14.0 |
| Sugar | 50.0 |
| Fat** | 5.0 |

| | |
|---|---|
| * FCMP is 25 wt.% of butterfat and 75 wt.% of non-fat milk solids. | |
| ** The fat applied was a mixture of palm oil olein and shea olein with C_{SAFA} : C_{UNSAT} = 0.75; the SUS content was 39 wt.%. | |

The products were made, using a standard mixing/conching/tempering procedure. The tempering was carried out in a Leatherhead Temper Vessel. The tempering time was measured. The products were stored at 15, 20 and 25°C. Bloom, gloss and hardness were evaluated.
Results :

| | | |
|---|---|---|
| Tempering time (min.) | | 60 |
| Bloom } | after 3 months | good |
| Gloss } | | |

| Hardness after 1 week | | |
|---|---|---|
| at 15°C | | 140 |
| at 20°C | | 110 |
| at 25°C | | 74 |

2. The above-mentioned results were compared with a standard chocolate composition with the following recipe :

| | wt.% |
|---|---|
| Cocoa powder | 6.0 |
| Cocoa butter | 26.0 |
| FCMP | 28.0 |
| Sugar | 40.0 |

So this formulation does not contain our fat A component.
Results :

| | | |
|---|---|---|
| Tempering time (min.) | | 86 |
| Bloom } | after 3 months | good |
| Gloss } | | |

| Hardness after 1 week | | |
|---|---|---|
| at 15°C | | 130 |
| at 20°C | | 100 |
| at 25°C | | 74. |

3. Example 1 was repeated, using a fat that was a mixture of palm oil, shea and medium-hardened soybean oil. C_{SAFA} : C_{UNSAT} = 0.87; SUS content = 41%.
The hardness of these products was measured after storage at 15°C and at 15/25°C cycle.
Results after storage for 1 month :

| | 15°C | 15/25°C |
|---|---|---|
| Hardness | 130 | 155 |

Compared with products in similar recipe, however, using cocoa butter as fat :

| | 15°C | 15/25°C |
|---|---|---|
| Hardness | 185 | 222 |

So the reference products made in this way were far too hard while the products according to the invention had good hardness. The tempering times in these cases were about similar.

## Claims

1. Fat composition suitable for use in chocolate or chocolate-like materials comprising components A, B and C, wherein :
A = vegetable fat having a weight ratio between saturated fatty acid residues (= C_{SAFA}) and unsaturated fatty acid residues (C_{UNSAT}) ranging from 0.5-1.3, preferably from 0.7-1.1,
C_{SAFA} being the total of saturated fatty acid residues having 16 and 18 C atoms and the trans-mono-unsaturated residues having 18 C atoms,
C_{UNSAT} being the total of the cis-mono-unsaturated and di-unsaturated fatty acid residues having 18 C atoms,
B = a fat having a SUS content greater than 65 wt.%, preferably greater than 80 wt.%;
S = saturated fatty acids having 16 or 18 C atoms;
U = mono-unsaturated fatty acid having 18-22 C atoms;
C = butterfat or a fraction thereof,
A, B and C being present in amounts of 5-30 wt.%, preferably 10-20 wt.% of A, more than 60 wt.%, preferably more than 70 wt.% of B, 5-20 wt.%, preferably 7-12 wt.% of C.

2. Fat composition according to Claim 1 wherein fat A has an N₂₀ (unstab., NMR) of less than 25.

3. Fat composition according to Claim 1, wherein fat A has a SUS content of less than 55 wt.%, preferably less than 50 wt.% (S and U as defined in Claim 1).

4. Fat composition according to Claim 1, wherein fat A is a blend of a liquid oil D (other than fat B) having a (U₂S + U₃) content of more than 35 wt.%, preferably more than 50 wt.%, and a fat E having an N₂₀ (unstab. NMR) of more than 20, preferably more than 40.

5. Fat composition according to Claim 4, wherein fat D is selected from the group consisting of palm oil, palm oil fractions, sunflower oil, rapeseed oil, high oleic rapeseed oil, fractions or mixtures thereof.

6. Fat composition according to Claim 4, wherein fat E is a trans-hardened fat having a melting point between 25 and 55°C.

7. Fat composition according to Claim 1, wherein fat B is coca butter or a cocoa butter equivalent.

## Patentansprüche

1. Fettzusammensetzung, die zur Verwendung in Schokolade- oder Schokolade-artigen Materialien geeignet ist, umfassend Komponenten A, B und C, worin:
A = pflanzliches Fett mit einem Gewichtsverhältnis von gesättigten Fettsäureresten (C_{SAFA}) zu ungesättigten Fettsäureresten (C_{unges.}) im Bereich von 0,5 bis 1,3, vorzugsweise 0,7 bis 1,1,
wobei C_{SAFA} die Gesamtheit gesättigter Fettsäurereste mit 16 und 18 C-Atomen und trans-einfach ungesättigter Reste mit 18 C-Atomen ist,
C_{unges.} die Gesamtheit cis-einfach ungesättigter und zweifach ungesättigter Fettsäurereste mit 18 C-Atomen ist,
B = ein Fett mit einem SUS-Gehalt von mehr als 65 Gew.-%, vorzugsweise mehr als 80 Gew.-%,
S = gesättigte Fettsäuren mit 16 oder 18 C-Atomen,
U = einfach ungesättigte Fettsäuren mit 18 bis 22 C-Atomen,
C = Butterfett oder eine Fraktion davon,
wobei A, B und C in Mengen von 5 bis 30 Gew.-%, vorzugsweise 10 bis 20 Gew.-%, A, mehr als 60 Gew.-%, vorzugsweise mehr als 70 Gew.-%, B und 5 bis 20 Gew.-%, vorzugsweise 7 bis 12 Gew.-%, C vorliegen.

2. Fettzusammensetzung nach Anspruch 1, worin Fett A einen N₂₀-Wert (unstab., NMR) von weniger als 25 hat.

3. Fettzusammensetzung nach Anspruch 1, worin Fett A einen SUS-Gehalt von weniger als 55 Gew.-%, vorzugsweise weniger als 50 Gew.-% hat (wobei S und U wie in Anspruch 1 definiert sind).

4. Fettzusammensetzung nach Anspruch 1, worin Fett A ein Gemisch von einem flüssigen Öl D (das von Fett B verschieden ist) mit einem (U₂S + U₃)-Gehalt von mehr als 35 Gew.-%, vorzugsweise mehr als 50 Gew.-%, und einem Fett E mit einem N₂₀-Wert (unstab., NMR) von mehr als 20, vorzugsweise mehr als 40, ist.

5. Fettzusammensetzung nach Anspruch 4, worin Fett D aus der aus Palmöl, Palmölfraktionen, Sonnenblumenöl, Rapsöl, Rapsöl mit hohem Ölsäuregehalt, Fraktionen oder Mischungen davon bestehenden Gruppe ausgewählt ist.

6. Fettzusammensetzung nach Anspruch 4, worin Fett E ein transgehärtetes Fett mit einem Schmelzpunkt zwischen 25 und 55°C ist.

7. Fettzusammensetzung nach Anspruch 1, worin Fett B Kakaobutter oder ein Kakaobutteräquivalent ist.

## Revendications

1. Composition de graisse appropriée pour être utilisée dans du chocolat ou dans des matières de type chocolat, comprenant des composants A, B, et C dans laquelle :
A = graisse végétale présentant un rapport de masse entre résidus d'acide gras saturés ( = C_{SAFA}) et résidus d'acide gras non saturés (= C_{UNSAT}) compris dans la gamme allant de 0,5 à 1,3, et de préférence compris dans la gamme allant de 0,7 à 1,1.
C_{SAFA} étant la quantité totale des résidus d'acide gras saturés contenant 16 et 18 atomes de carbone et les résidus trans-mono-insaturés contenant 18 atomes de carbone.
C_{UNSAT} étant la quantité totale de résidus d'acide gras cis-mono-insaturés et di-insaturés contenant 18 atomes de carbone.
B = une graisse présentant une teneur en SUS supérieure à 65 % en masse, de préférence supérieure à 80 % en masse.
S = acides gras saturés contenant 16 ou 18 atomes de carbone ;
U = acides gras mono-insaturés contenant 18 à 22 atomes de carbone ;
C = graisse de beurre ou une fraction de celle-ci.
A, B et C étant présents dans des proportions comprises entre 5 et 30 % en masse, de préférence entre 10 et 20 % en masse pour A, supérieures à 60 % en masse, de préférence supérieures à 70 % en masse pour B, et comprises entre 5 et 20 % en masse, de préférence entre 7 et 12 % en masse pour C.

2. Composition de graisse selon la Revendication 1, dans laquelle la graisse A présente une valeur N₂₀ (non stab., RMN) inférieure à 25.

3. Composition de graisse selon la Revendication 1, dans laquelle la graisse A présente une teneur en SUS inférieure à 55 % en masse, de préférence inférieure à 50 % en masse (S et U étant tels que définis dans la Revendication 1).

4. Composition de graisse selon la Revendication 1, dans laquelle la graisse A est constituée d'un mélange d'une huile liquide D (autre que la graisse B) présentant une teneur en (U₂S + U₃) supérieure à 35 % en masse, de préférence supérieure à 50 % en masse, et une graisse E présentant une valeur N₂₀ (non stab., RMN) supérieure à 20, de préférence supérieure à 40.

5. Composition de graisse selon la Revendication 4, dans laquelle la grasse D est une graisse sélectionnée parmi le groupe composé d'huile de palme, de fractions d'huile de palme, d'huile de tournesol, d'huile de colza, d'huile de colza fortement oléique, de fractions ou de mélanges de celles-ci.

6. Composition de graisse selon la Revendication 4, dans laquelle la graisse E est une graisse trans-durcie présentant un point de fusion compris entre 25 et 55 ° C.

7. Composition de graisse selon la Revendication 1, dans laquelle la graisse B est du beurre de cacao ou un équivalent de beurre de cacao.
